# EUROPEAN PATENT SPECIFICATION

(11) **EP 3 794 940 B1**
(45) Date of publication and mention of the grant of the patent: **15.06.2022**
(21) Application number: 20196807.0
(22) Date of filing: 18.09.2020
(51) Int. Cl.: A01J 7/02, A01J 5/01

(54) **MILKMETER**
MILCHMESSER
COMPTEUR À LAIT

(30) Priority: 20.09.2019 NL 2023871
(43) Date of publication of application: 24.03.2021
(73) Proprietor: Nedap N.V., 7141 DC Groenlo (NL)
(72) Inventor: LAMMERS, Rudie Jan Hendrik, 7141 DC Groenlo (NL); VAN DIJK, Jeroen Martin, 7141 DC Groenlo (NL); KLOOSTRA, Sietze, 7141 DC Groenlo (NL); SCHUTTE, Jort Johannes Wilhelmus, 7141 DC Groenlo (NL)
(74) Representative: V.O.

(56) References cited:
- EP-A1- 0 515 818
- EP-A1- 3 329 767
- EP-A1- 3 494 777

## Description

The invention relates to a milk meter for measuring a flow rate of a milk flow, provided with an inlet to which, in use, the milk flow is supplied, an outlet where the milk flow leaves the milk meter, in use, and a liquid flow path extending from the inlet to the outlet. Such a milk meter is known from NL2017924B.

In order to improve this known milk meter, in the liquid flow path a valve is included which can selectively take up a first or second valve position where in the first valve position at least a first part of the liquid path is open and in the second valve position at least the first part of the liquid path is closed, wherein the milk meter is furthermore provided with at least one sensor device for generating a sensor signal indicative of a flow rate of a liquid flow through the milk meter, and a processing unit, wherein the processing unit is operatively connected with the at least one sensor device for receiving the sensor signal; such a milk meter is known from EP3494777A1, which discloses the preamble of independent claims 1 and 16.

The milk meter of the invention according to claim 1 is characterized in that the processing unit is configured for carrying out the steps of: establishing of a performance of a rinsing operation on the milk meter whereby the milk meter is rinsed with a rinsing liquid different from the milk flow; and, depending on the establishing of the rinsing operation and depending on the sensor signal, generating of a condition signal indicative of the establishing of a liquid flow during the performance of the rinsing operation.

The valve included in the liquid path can be used for, among other purposes, closing off the liquid path so that during cleaning of the milk meter, all spaces of the milk meter carrying liquid in use can be filled with cleaning liquid. When during cleaning, for any reason, this valve is not controlled, the milk meter does not become sufficiently clean. This can entail problems with the germ count (cleanliness) of the milk; also, poor cleaning has an adverse effect on the accuracy of the measurement. It is hence of great importance that the milk meter is cleaned correctly.

To be able to signal, and possibly prevent, parts of the milk meter getting cleaned insufficiently, the milk meter according to the invention is provided with a processing unit. The processing unit establishes whether a rinsing operation for the purpose of cleaning the milk meter is taking place, and thereupon, depending on the signal from a sensor device for measuring a liquid flow rate, generates a condition signal. When the valve is not in the second valve position during the rinsing operation, this is measurable in the established liquid flow rate. Hence, by making the condition signal dependent on the established liquid flow rate during the rinsing operation, this condition signal is indicative of a correct or wrong position of the valve. On the basis of the condition signal, it can thus be signaled whether a cleaning is being carried out correctly, and if desired intervention can ensue.

For generating the condition signal, in some embodiments, the processing unit may be configured for, when a rinsing operation is being performed, comparing the sensor signal with a limiting value; and for generating the condition signal such that it indicates whether the sensor signal exceeds the limiting value during the performance of the rinsing operation. In some embodiments, a liquid flow rate greater than zero (> 0 kg/min) already suffices to have the condition signal indicate that a liquid flow is observed during the rinsing operation. In some embodiments, however, a particular maximum liquid flow rate during cleaning is permitted.

In some embodiments, the processing unit generates a control signal for operating the valve, for placing the valve in the second valve position depending on the condition signal. This may rectify the problem, as the case may be, immediately. If this should fail and the valve remains sitting in a wrong position during cleaning, the condition signal continues to indicate this. Also, according to some embodiments, it is possible that the milk meter comprises means for generating a warning signal depending on the condition signal. A user may thus be warned in a timely manner. Such means for generating a warning signal may comprise, for example, one or more of the following means: an indicator lighting element (for example an LED or warning light), a representation unit for representing a condition notification (for example, a display on which a warning is shown), a mechanical telltale element (for example, a color-changing surface or other mechanical telltale), or an audio generator (for generating an audible alert).

The step of establishing whether a rinsing operation is taking place can proceed in different manners. For example, according to some embodiments, the processing unit is configured for registering an instruction signal for actuating a cleaning function of the milk meter. The instruction signal can be, for example, an external starting signal for starting the cleaning. The processing unit may be configured to receive such signals and on the basis of thereof conclude that rinsing has started. In some cases, also at the end of the rinsing operation an instruction can be received, and in some cases the processing unit can for instance allow a particular length of time to elapse to establish that rinsing is finished.

According to some other embodiments, the milk meter comprises a temperature sensor for measuring a temperature in the liquid flow path and generating a temperature signal, while the processing unit is operatively connected with the temperature sensor for receiving the temperature signal for establishing the rinsing operation. For example, in some of these embodiments, the processing unit is configured for observing temperature values depending on the temperature signal, and the processing unit is further configured for comparing the temperature values with a limiting value and establishing the performance of the rinsing operation when at least one of the temperature values exceeds the limiting value. This limiting value can be, for example, greater than 37 degrees Centigrade, preferably greater than 38 degrees Centigrade, and is more preferably between 38 degrees Centigrade and 50 degrees Centigrade. For example, the limiting value may be set at 40 degrees Centigrade, because this temperature, under normal conditions, is not attained in the milk flow during milking, whereas the cleaning liquid normally has a temperature that is greater than 40 degrees Centigrade. The temperature values may for instance be observed by the processing unit periodically, for example every five seconds. This, of course, can also be done with a different time interval, for example two seconds or ten seconds, and is not limited to a particular time interval. Also, the measurement may be done at irregular times or, for example, within defined time intervals after the registering of a particular instruction ('start cleaning').

The milk meter according to preferred embodiments of the invention is furthermore provided with a stabilization chamber which is included in the liquid flow path and a float which is in the stabilization chamber and is configured to float on milk of the milk flow that is in the stabilization chamber, wherein the milk meter is configured such that a level of milk in the stabilization chamber depends on the flow rate of the milk flow. This milk meter may be further provided with, for example, a buffer reservoir which is included upstream of the stabilization chamber in the liquid flow path, wherein in a sidewall of the buffer reservoir an outflow opening is provided which extends from a lowest point of the outflow opening upwardly and which is in fluid communication with the outlet, wherein a top of the buffer reservoir comprises an inlet opening which is in fluid communication with the inlet, and wherein the buffer reservoir and the stabilization chamber are connected with each other via a fluid connection, such that the buffer reservoir, the fluid connection and the stabilization chamber, in use, function as communicating vessels so that, in use, the level of the milk in the stabilization chamber is equal to a level of the milk in the buffer reservoir. According to some embodiments, the milk meter is characterized in that the first inlet opening of the valve is in fluid communication with the outflow opening of the buffer reservoir and the outlet opening of the valve is in fluid communication with the outlet of the milk meter, while the first part of the liquid flow path extends from the outflow opening of the buffer reservoir to the outlet of the milk meter. Further, the valve may furthermore comprise a second inlet opening which is in fluid communication with a drainage opening of the stabilization chamber, wherein in the first valve position at least a second part of the liquid path is closed and in the second valve position at least the second part of the liquid path is open, and wherein the second part of the liquid path extends through the drainage opening of the stabilization chamber to the outlet of the milk meter.

In preferred embodiments, the sensor device is configured to measure the height of the level of the milk in the stabilization chamber. Because the height of the milk (or liquid) level in the stabilization chamber is a measure of the liquid flow rate, a measurement of this level is sufficient to indicate the flow rate, and thus the condition of the condition signal. Furthermore, the sensor device may comprise a transmitter unit for wirelessly emitting a signal which comprises information about the measured flow rate of the milk flow. The processing unit can then be in communication with a receiver for receiving this wireless signal.

According to a second aspect of the invention, it is directed to a method according to claim 16 for operating a milk meter, wherein the milk meter is configured for measuring a flow rate of a milk flow, and wherein the milk meter comprises an inlet for supplying the milk flow, an outlet for discharging the milk flow, and a liquid flow path which extends from the inlet to the outlet, wherein the milk meter furthermore comprises: a valve included in the liquid flow path and which can selectively take up a first or second valve position where in the first valve position at least a first part of the liquid path is open and in the second valve position at least the first part of the liquid path is closed; at least one sensor device for generating a sensor signal indicative of a flow rate of a liquid flow through the milk meter; and a processing unit, wherein the processing unit is operatively connected with the at least one sensor device for receiving the sensor signal; wherein the method comprises the steps of: establishing, by the processing unit, of a performance of a rinsing operation on the milk meter whereby the milk meter is rinsed with a rinsing liquid different from the milk flow; depending on the establishing of a rinsing operation and depending on the sensor signal, generating, by the method, of a condition signal indicative of the establishing of a liquid flow during the performance of the rinsing operation.

The invention will be further elucidated on the basis of the drawing, in which:
Fig. 1a shows a transparent view of a possible embodiment of the milk meter according to the invention;
Fig. 1b shows a transparent view of the milk meter according to Figure 1a in the direction of the arrow b in Figure 1a according to the invention;
Fig. 1c shows a transparent view of the milk meter according to Figure 1a in the direction of the arrow c in Figure 1a according to the invention;
Fig. Id shows a transparent view of the milk meter according to Figure 1a in the direction of the arrow d in Figure 1a according to the invention;
Fig. 2a shows a cross section of the milk meter along the line A-A in Figure 1b;
Fig. 2b shows a view of an outflow channel of Figure 1a;
Fig. 3 shows a possible embodiment of the measuring unit of the milk meter of Figure 1a;
Fig. 4 shows a cross section of an alternative embodiment of a milk meter according to the invention;
Fig. 5 shows a possible embodiment of the measuring unit of the milk meter of Figure 4;
Fig. 6 shows the milk meter of Figure 1a provided with an alternative sensor device;
Fig. 7 shows a view of a second alternative embodiment of a milk meter according to the invention;
Fig. 8 shows a cross section of the milk meter according to Figure 7 in which a valve takes up a second valve position;
Fig. 9 shows a cross section of the milk meter according to Figure 7 in which a valve takes up a first valve position;
Fig. 10 schematically shows a system according to the invention comprising a milking device and a milk meter according to the invention;
Figures 11a and 11b schematically show the working of a milk meter according to the invention, with the valve in a correct valve position during cleaning; and
Figures 12a and 12b schematically show the working of a milk meter according to the invention, with the valve in an incorrect valve position during cleaning.

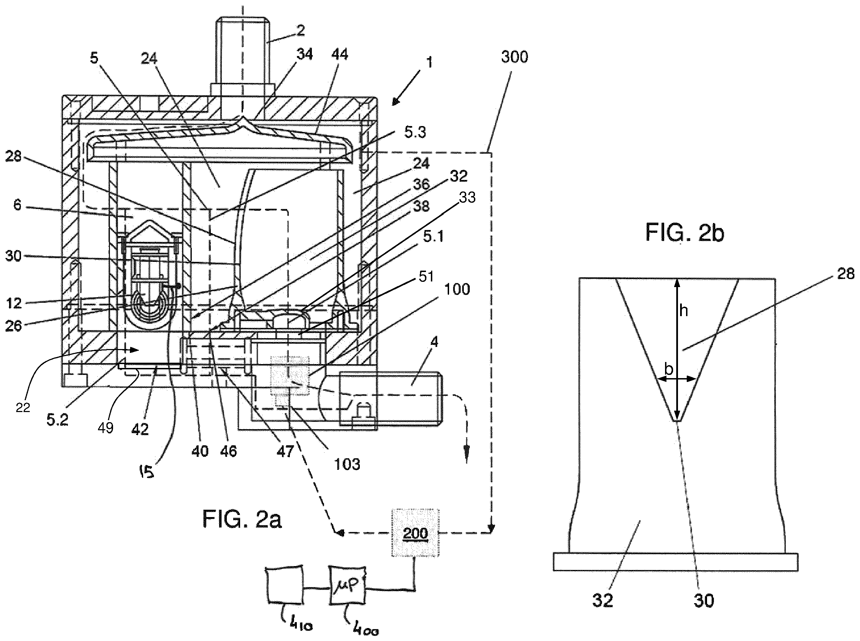

In Figure 2, with reference numeral 1 a possible embodiment of a milk meter according to the invention is indicated. The milk meter is provided with an inlet 2 into which, in use, the milk flow whose flow rate is to be measured is supplied. Further, the milk meter is provided with an outlet 4 where the milk flow whose flow rate has been measured, in use, leaves the milk meter again. Between the inlet and the outlet extends a liquid flow path (also: liquid path) 5 which is schematically indicated in the drawing with a broken line. Obviously, the broken line concerns just one possible pathway along which the milk flow can proceed; reason why the representation is schematic.

The milk meter is provided with a stabilization chamber 6 which is also included in the liquid flow path 5. The milk meter is furthermore provided with a float 8 which is in the stabilization chamber and which is configured to float on the milk of the milk flow that, in use, is in the stabilization chamber. The milk meter is configured such that a level of the milk in the stabilization chamber (the height of the liquid surface of the milk in the stabilization chamber) depends on the flow rate of the milk flow. In this example, it holds that the height of the level of the milk in the stabilization chamber increases when the flow rate increases. The milk meter is further provided with a sensor device for determining the flow rate of the milk flow through the milk meter. To this end, in an example, the sensor device comprises an electronic measuring unit 12.

The milk meter is further provided with a magnetization unit 10 for generating a magnetic field in the stabilization chamber. The magnetic field that is generated is such that the magnetic field strength varies in a height direction h of the stabilization chamber. In the float, the electronic measuring unit 12 is arranged for measuring the strength of the magnetic field. The strength of the magnetic field is also referred to as a magnetic flux. The measured strength of the magnetic field is a measure of the height at which the float is floating on the milk in the stabilization chamber. Because the height at which the float is floating within the stabilization chamber, in turn, is determined by the flow rate of the milk flow, in this way information about the flow rate is obtained. To put it differently, the flow rate is measured in this manner.

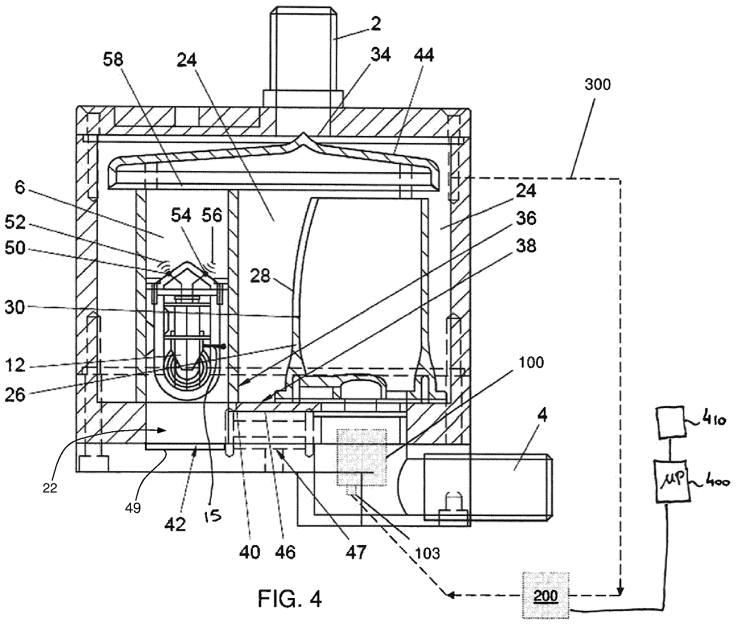

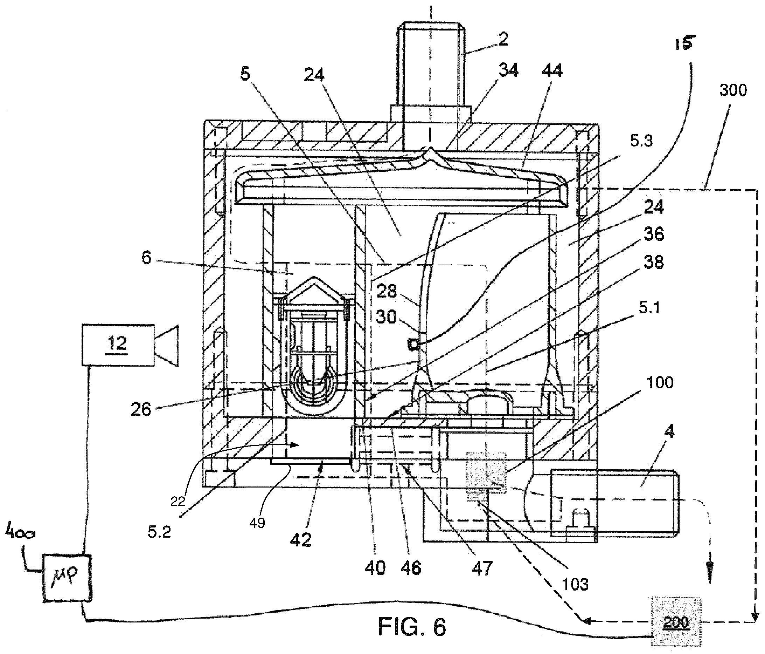

Furthermore, the milk meter 1 is provided with a temperature sensor 15 with which the temperature in the liquid flow path 5 can be measured. The temperature sensor 15 makes it possible, for one thing, to establish on the basis of the temperature of the liquid in the stabilization chamber 6 whether milk or a different liquid is flowing along the liquid flow path 5. This is because the milk flow during milking never, or only very rarely, attains a temperature of 40 degrees Centigrade or higher. Cleaning liquids, such as acids or bases that are used for cleaning the compartments of the milk meter 1, typically attain a temperature in excess thereof. By measuring the temperature with temperature sensor 15 it can therefore be established whether milk is flowing through the milk meter, or that a different liquid is flowing through the milk meter. While in the example shown the temperature sensor 15 is part of the sensor device 12, and thus is located in the stabilization chamber 6, this is by no means requisite. The sensor 15 may be in a different compartment of the milk meter 1, and does not have to be part of sensor device 12 nor does it have to be operatively connected therewith. However, in this embodiment, with advantage, use is made of the processor 18 and transmitter unit 14 present in the sensor device 12, which make it possible to transmit the temperature values to, for example, a central processing unit 400 which may be located outside the housing of the milk meter. The processing unit 400 can receive the signals in that it is operatively connected with receiver 410. Figure 6, by contrast, makes use of a separate temperature sensor 15 which is not part of the sensor device 12. Such a location of temperature sensor 15 could also have been used in Figure 2 or Figure 4, while the temperature values could be sent to the processing unit 400 in a wireless or wired manner.

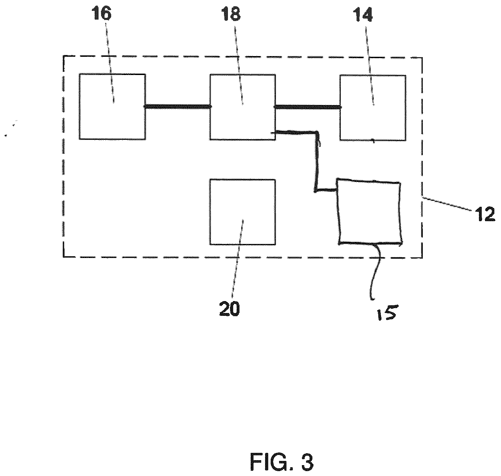

As can be seen in Figure 3, the electronic measuring unit is provided with a transmitter unit 14 for emitting a signal which comprises information about the measured flow rate of the milk flow. The electronic measuring unit is further provided with a Hall sensor 16 for detecting the magnetic field, and the temperature sensor 15. Furthermore, the sensor device 12 contains a processor 18 for processing measuring signals from the Hall sensor 16 to obtain information about the flow rate of the milk flow. The processor 18 also processes the output signal of the temperature sensor 15 and calculates the corresponding temperature values. The information about the flow rate of the milk flow and the temperature values are emitted wirelessly with the aid of the transmitter unit 14. The electronic measuring unit 12 further includes a supply 20 for providing a supply voltage for the processor and the transmitter unit.

The milk meter in this example is further provided with a buffer reservoir 24 which is included upstream of the stabilization chamber in the liquid flow path 5. Provided in a sidewall 26 of the buffer reservoir is an outflow opening which extends from a lowest point 30 of the outflow opening upwardly in the direction h and which is in fluid communication with the outlet 4. In this example, it holds that the outflow opening 28 is in fluid communication with the outlet 4 via an outflow channel 32. To this end, the outflow channel is provided at its underside with an outflow channel opening 33. A top of the buffer reservoir is provided with an inlet opening 34 which is in fluid communication with the inlet 2. The buffer reservoir 24 and the stabilization chamber 6 are connected with each other via a fluid connection 36. The construction is such that the buffer reservoir 24, the fluid connection 36 and the stabilization chamber 6, in use, function as communicating vessels so that, in use, a level of the milk in the stabilization chamber (measured in the direction h) is equal to a level of the milk in the buffer reservoir (likewise measured in the direction h).

In this example, it holds that a bottom 38 of the buffer reservoir, and a bottom 40 of the fluid connection 36 are at a greater height than a bottom 42 of the stabilization chamber. The buffer reservoir and the stabilization chamber can be directly or indirectly open to an environment formed in a milking system for milking animals in which the milk meter is included, for instance via small apertures at a top of the buffer reservoir and the stabilization chamber (not shown). This environment of the system typically has a somewhat reduced pressure P2 (also referred to as vacuum pressure) relative to the air pressure (also referred to as atmospheric pressure PI). This has as a consequence that the buffer reservoir, the stabilization chamber and the fluid connection function as communicating vessels, the vessels being formed by the buffer reservoir and the stabilization chamber. Clearly, in a different application, the buffer reservoir and the stabilization chamber may also be in open communication with an environment outside the milking system and hence with the space in a barn. Also, the buffer reservoir and the stabilization chamber may be in open communication with a space within the milk meter in which the buffer reservoir and the stabilization chamber are included.

As can be seen in Figure 2b, it holds that the outflow opening 28 of the buffer reservoir has a width b which increases in an upward direction (in the direction h). The lowest point 30 of the outflow opening is below a half height H of the stabilization chamber. This is merely an example. This point may, if desired, be higher or lower and the point 30 may even be on the bottom 38 of the buffer reservoir.

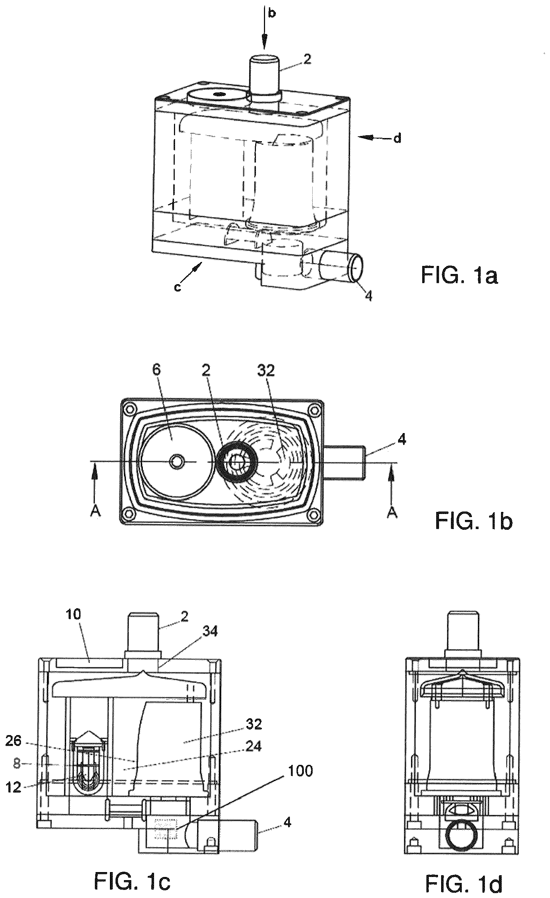

As can be seen in Figure 1a and Figure 1b, it holds that the stabilization chamber 6 in this example is of substantially cylinder-shaped design, with the buffer reservoir extending around the stabilization chamber. More particularly, it holds that the buffer reservoir also extends around the outflow channel 32 and that the stabilization chamber 6 is next to the outflow channel 32. The outflow channel in this example is likewise of substantially cylinder-shaped design. However, this is not requisite.

The milk meter is furthermore provided with a milk flow spread plate 44 which is arranged in the liquid flow path 5 between the inlet and the buffer reservoir and is positioned such that the milk flow is distributed by the plate. The magnetization unit is implemented as a permanent magnet which in this example is arranged above the stabilization chamber; more specifically, in this example under the spread plate 44. The magnetic unit may also be arranged in other places, such as under the stabilization chamber.

The operation of the milk meter is as follows. When a liquid flow is supplied to the inlet 2, it will first come into contact with the spread plate 44. The milk then flows over the edges of the spread plate into the buffer reservoir 24. This buffer reservoir 24 will start to fill. The stabilization chamber is likewise filled with the milk via the fluid connection 36. The arrangement is such that the level of the milk in the buffer reservoir and in the stabilization chamber is the same. When the level of the milk in the buffer reservoir rises further, the level of the milk will reach the lowest point 30 of the outflow opening 28. As soon as the milk level gets higher, the buffer reservoir will start to empty via the outflow opening 28. During measurement, the level of the milk is thus equal to, or higher than, the lowest point 30. The height of the lowest point 30 is chosen such that during measurement the float will always float properly. The milk flowing out via the outflow opening 28 will flow via the outflow channel 32 to the outlet 4. When the milk level in the milk meter rises further, a larger portion of the outflow opening 28 will be below the milk level. As a result, the magnitude of the flow rate of the milk that flows through the outflow opening 28 will increase. Eventually, an equilibrium will be established between the supply of milk to the buffer reservoir and the amount of milk that leaves the buffer reservoir. This equilibrium is then also associated with a particular height of the level of the milk in the buffer reservoir. This equilibrium and hence the height of the liquid surface of the milk (here also called the level) depends on the magnitude of the flow rate at which the milk is being supplied to the inlet 2. When the flow rate of the milk that is supplied to the inlet 2 increases, there will be a short period of time in which the flow rate through the outflow opening 28 is smaller than the flow rate of the milk through the inlet. The result is that the milk level in the buffer reservoir will rise. The result of this is that the flow rate through the outflow opening 28 will increase (because a larger part of the outflow opening is below the milk level) until an equilibrium is established again between supply and discharge of milk in the buffer reservoir. When the flow rate of the milk that is supplied to the inlet 2 decreases, there will be a short period of time in which the flow rate of the milk that flows through the outflow opening 28 is greater than the flow rate of the milk that flows through the inlet. The consequence is that the milk level in the buffer reservoir will fall, as a result of which the flow rate through the outflow opening will decrease (in that a smaller part of the outflow opening is below the level of the milk (the milk surface) in the buffer reservoir) until an equilibrium is established again between supply and discharge of milk in the buffer reservoir. The milk level in the stabilization chamber (the height of the liquid surface of the milk in the stabilization chamber) will follow the milk level of the buffer reservoir. The measured strength of the magnetic field will hence be a measure of the height at which the float is floating on the milk in the stabilization chamber. Because the height at which the float is floating within the stabilization chamber, in turn, is determined by the flow rate of the milk flow, in this manner information about the flow rate is obtained. To put it differently, the flow rate is measured in this manner. The float is of exchangeable design, so that it can be replaced when the supply is empty or when the electronics need to be updated.

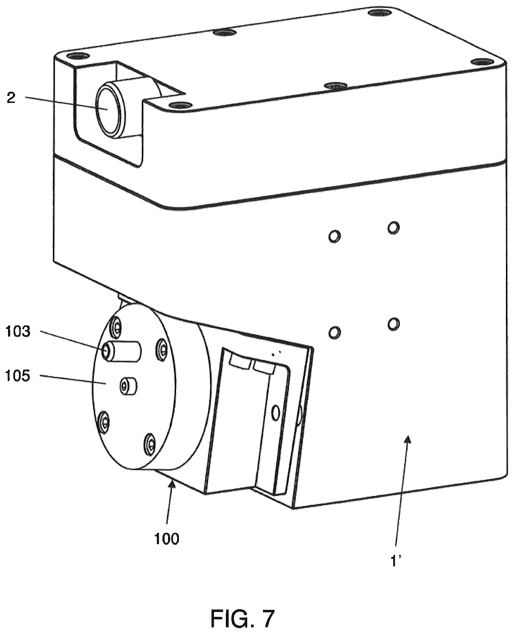

In particular, the stabilization chamber and the buffer reservoir are each further provided with outlet openings 22 and 46 which have no influence on the measurement because the outlet opening 22 is closed off, when the flow rate is being measured, by a valve 49 yet to be further discussed, and because through the outlet opening 46 only a relatively small portion of the milk can flow out of the stabilization chamber. These openings, so-called drainage openings, are provided to ensure that after use the stabilization chamber and the buffer reservoir can empty via the outlet 4. These openings may also be each provided with a valve unit for opening and closing the drainage openings. The valve unit of the opening 46 is indicated by way of example in Figure 2a with reference numeral 47. The drainage opening 22 may be closed off and cleared with the valve unit 49. Further, the outflow channel opening 33 and the outflow channel 32 may be closed off and cleared with a valve unit 51. The functions of the valve unit 49 and the valve unit 51 can be taken over by a valve 100 (see Figures 7-9 for a special embodiment of the valve 100; in Figure 2a and Figure 4 the the drainage opening 22 and clears the outflow channel 32, and in a second valve position clears the drainage opening 22 and closes off the outflow channel 32. Possibly, also the function of valve 47 may be taken over by valve unit 100. If the valve 100 is present, the valves 49 and 51 (and possibly valve unit 47) can be omitted. Hereinafter, the assumption will be that the closure and clearance of the drainage opening 22 and the outflow channel opening, respectively, is carried out with the valve 100.

According to an embodiment, therefore, the valve 100 may be replaced by the two valves 49, 51 and vice versa. A more general name for the valve 100 and the combination of the valves 49, 51 is valve system. Accordingly, when reference is made to the valve 100, also valve system may be intended.

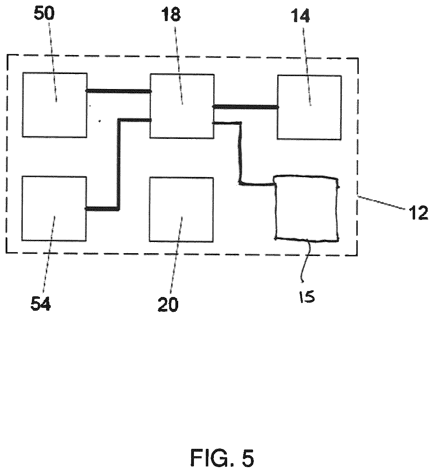

The invention is not in any way limited to the above-outlined embodiment. Thus, the stabilization chamber and/or the outflow channel may for instance each have the shape of a rectangular bar instead of a cylinder. The float can then likewise be of rectangular design. In this example, the stabilization chamber 6, the buffer reservoir 24, the outflow channel 32 and the fluid connection 36 are of a plastic. This provides the advantage that these parts do not influence the magnetic field. Also, the electronic measuring unit may be provided with other means than described above for contactlessly measuring the height within the stabilization chamber at which the float is floating on the milk in the stabilization chamber so that the measured height is a measure of the flow rate of the milk flow. Such a variant is shown in Figures 4 and 5, where parts corresponding to preceding figures are provided with the same reference numerals. The electronic measuring unit 12 is provided with a transmitter 50 for emitting up in an upward direction a pulsating electromagnetic or acoustic measuring signal 52, and a receiver 54 for receiving reflections 56 of the measuring signal on a part 58 of the milk meter that is fixed relative to the stabilization chamber. The processor 18 is configured to determine the time difference between the emission and reception of a pulse of the measuring signal, whereby the time difference is a measure of the height within the stabilization chamber at which the float is floating on the milk in the stabilization chamber and whereby hence the measured time lapse is a measure of the flow rate of the milk flow. The sensor device 12 in Figures 4 and 5 further contains, analogously to Figure 2, a temperature sensor 15. The working of this sensor 15 can be identical to the working of the corresponding sensor in Figures 2 and 3, and is therefore not described in more detail here. With the aid of the transmitter unit 14, again information about the flow rate of the milk flow and the measured values obtained with temperature sensor 15 are emitted. These can be received by central processing unit 400, being operatively connected with a receiver 410.

Other variants are also conceivable. For instance, an inner wall of the stabilization chamber may be provided with mutually optically different markings which are separated from each other in an upward direction. With an optical sensor of the measuring unit 12 which has a horizontal viewing direction, depending on the height at which the float is in the stabilization chamber, at least one defined marking can be detected. By determining which marking or markings are detected with the sensor, the height at which the float is within the stabilization chamber can be determined. The detected height is then a measure of the flow rate of the milk flow. Information about the flow rate of the milk flow and temperature values obtained with temperature sensor 15 can again be emitted with the transmitter unit 14.

Such variants are each understood to fall within the scope of the invention. Also, the sensor device 12 may be arranged outside the float (see Figure 6 where mutually corresponding parts in Figures 1a-2b on the one hand and Figure 6 on the other are provided with the same reference numerals). The sensor device 12 may, for example, be outside the stabilization chamber 6 and be configured to measure the height of the level of the milk in the stabilization chamber, the measured height of the level of the milk then being a measure of the flow rate of the milk flow. The sensor device may then be provided, for example, with at least one sensor, such as an optical sensor, to measure the height of the level of the milk. The walls of the stabilization chamber may be transparent for this purpose. Also, the sensor device which is arranged, for example, outside the stabilization chamber may be configured to measure the height at which the float is floating on the milk in the stabilization chamber, the measured height of the float then being a measure of the flow rate of the milk flow. The sensor device may then be provided, for example, with at least one sensor, such as an optical sensor, to measure the height at which the float is within the stabilization chamber. The walls of the stabilization chamber may again be transparent for this purpose.

The milk meter according to Figure 1 may, as mentioned, be further provided with valve 100. Hereinafter, this variant is used as a starting point. The valve 100 can selectively take up a first or second valve position where in the first valve position at least a first part 5.1 of the liquid path 5 is open and a second part 5.2 is closed and in the second valve position at least the first part 5.1 of the liquid path 5 is closed and the second part of the liquid path 5 is open. The first part 5.1 of the liquid flow path in this example is the part of the liquid flow path 5 that extends upstream of the valve through an outflow channel opening 33 in the bottom of the outflow channel and the outflow channel 32 itself. The second part 5.2 of the liquid flow path in this example is the part of the liquid flow path 5 that extends upstream of the valve through the drainage opening 22. That part of the liquid flow path 5 that extends from the inlet 2 to the outlet 4 via the drainage openings 46 hence cannot be closed off by the valve 100 and this concerns the third part 5.3 (via drainage opening 46) of the liquid flow path 5. The size of the drainage opening 22 and the size of the outflow channel opening 33 in this example are greater than the size of inlet 2.

The valve is provided with an operating opening 103, the milk meter being configured such that:
- if at the operating opening a first pressure prevails and upstream of the valve 100 in the liquid flow path 5 a second pressure prevails, with the first pressure being higher than the second pressure and the difference between the first and the second pressure being greater than a first predetermined value, the valve 100 takes up the first valve position (used as milking position);
- if at the operating opening 103 a third pressure prevails and upstream of the valve in the liquid flow path a fourth pressure prevails, with the difference between the third pressure and the fourth pressure being less than a predetermined second value, and the third pressure and the fourth pressure each being less than the first pressure, the valve 100 is in the second valve position (used as cleaning position); and
- if at the operating opening 103 a fifth pressure prevails and upstream of the valve in the liquid flow path a sixth pressure prevails, with the difference between the fifth pressure and the sixth pressure being less than a predetermined third value, and the fifth pressure and the sixth pressure each being greater than the second pressure, the valve is in the second valve position (used as rest position).

The operating opening 103 in this example is connected to a schematically shown pressure selection means 200 with which selectively a pressure at the operating opening can be set. During milking, as has been mentioned, the second pressure will be a relatively low pressure P2 (lower than the atmospheric pressure P1) which in technical jargon is also referred to as the vacuum pressure of a milking system. With the pressure selection means 200, then, as a pressure at the operating opening 103, an atmospheric pressure P1 is selected as the first pressure. The consequence is that the valve 100 is in the first valve position and closes off the drainage opening 22 and clears the throughflow channel opening 33 and milk can flow through the valve as discussed above for the milking of an animal.

When thereupon no milk is supplied to the inlet of the milk meter anymore, the milk meter will empty entirely via the outflow opening 33.

If the milk meter is not used, the pressure P2 will be approximately atmospheric. Then, at the operating opening, a pressure is selected that is also approximately atmospheric. The result is that the valve is in the second valve position in which the drainage opening 22 is cleared and the throughflow channel opening 33 is closed off.

If the milk meter 1 is empty, it can be cleaned. In that case, upstream of the valve in the liquid flow path the fourth pressure will prevail which in this example is equal again to the vacuum pressure P2 mentioned above. In this example, with the pressure selection means 200, as a third pressure at the operating opening a pressure will be selected which in this example is also approximately equal to the vacuum pressure P2. The result is that the valve 100 is in the second valve position and will clear the drainage opening and will close the outflow channel opening 33. Now, via the inlet 2 a cleaning liquid known per se can then be introduced into the milk meter to clean the milk meter. This liquid will then remain standing in the buffer reservoir 24 and the outflow channel 32. The stabilization chamber 6 is also filled with cleaning liquid but also empties via the drainage opening 22 so that the float comes down. After the cleansing action of the cleaning liquid, the first pressure is selected again with the pressure selection unit and upstream of the valve the second pressure prevails again, which is equal to the fifth pressure in this example. As a result, the valve will close off the drainage opening 22 again and clear the outflow channel opening 33 again. As a result, the cleaning liquid will flow via the outflow channel opening 33 and the drainage opening 46 to the outlet so that the buffer reservoir and the outflow channel empty. The buffer reservoir was already empty, so that the whole meter is now empty and ready for use to measure a flow rate of a milk flow.

If the milk meter is at rest and is not used, in this example a fifth pressure is selected with the pressure selection means 200, which is equal to the atmospheric pressure P1. Also, as sixth pressure, a pressure is selected that is equal to the atmospheric pressure P1. This last can be realized by switching off the milking plant to which the milk meter is coupled. As a result, the reduced pressure in the milk meter (so, in *inter alia* the buffer reservoir, stabilization chamber and outflow channel 32) will disappear and take a value that is also equal to the atmospheric pressure. The pressure at the entry is then the fifth pressure and the pressure upstream of the valve 100 is then the sixth pressure. The valve will then take up the second valve position and clear the drainage opening and close off the throughflow channel opening 33. The milk meter is presently in a condition which is denoted as rest: the milk meter 1 is not used and the valve 100 is in the second valve position.

In this example, therefore, it holds that the first pressure, fifth pressure and sixth pressure are equal to each other. Here it holds, in this example, that the first pressure is an atmospheric pressure. An advantage is that the first and fifth pressure can be simply selected with the pressure selection means. To this end, the pressure selection means 200 may for instance comprise a valve which is opened to connect the operating opening 103 with the environment of the milk meter.

Further, it holds in this example that the second pressure, third pressure and fourth pressure are equal to each other. Here it holds, furthermore, that the second pressure is a vacuum pressure of a value that prevails in a milking system. An advantage is that the third pressure can be simply selected with the pressure selection means 200. To this end, the pressure selection means 200 may for instance comprise a (second) valve which is opened to connect the operating opening 103 with, for example, a top of the buffer reservoir through a connection 300 (see Figure 2a) where in use the vacuum pressure concerned prevails. Accordingly, it holds, in particular, that the vacuum pressure is a vacuum pressure that, in use, prevails upstream of the valve 100 in the liquid path 5 and/or that the vacuum pressure is a reduced pressure relative to the atmospheric pressure. This vacuum pressure, of course, can also be derived elsewhere in the milking system outside of the milk meter for control of the operating opening with the pressure selection means 200.

In Figure 4 and Figure 6 the valve 100 and the pressure selection means 200 are also shown. Operation is entirely analogous to what has been discussed with reference to Figures 1-3.

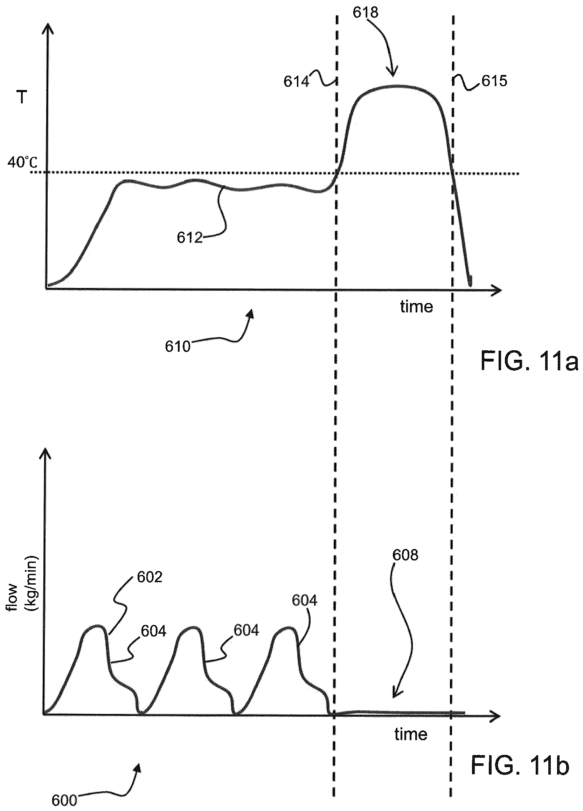

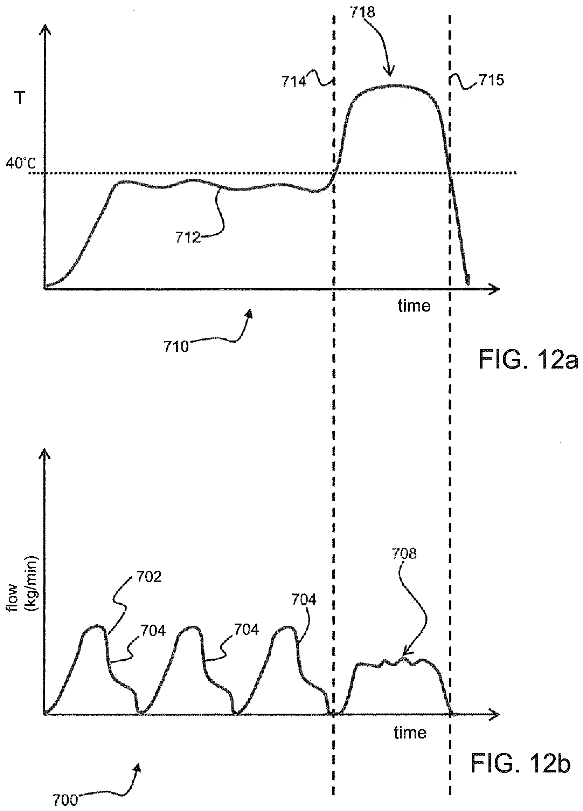

Figures 11a, 11b, 12a and 12b schematically show the working of a milk meter according to an embodiment of the invention. Shown in Figure 11b is a graph 600 of the liquid flow rate 602 in the course of time, as for instance measured with a sensor device 12 in a milk meter 1, such as, for example, the milk meter shown in Figure 2 and/or the other embodiments which have been discussed above and will be discussed hereinafter. The Figures 11a and 11b show a correct working of the valve 100 (or, alternatively, the valve 49 and the valve 51) during a cleaning action. The liquid flow rate 602 during milking characteristically reflects the milk flowing through the milk meter 1 in waves 604. The time portion before the broken line 614 shows the liquid flow rate during milking - the flow rate (flow kg/min) of the milk flow. At the time indicated by broken line 614, milking is finished, and a cleaning action is started. The valve 100 is placed in the second valve position (or if the valve 100 is replaced by the valve 49 and the valve 51: in the cleaning position the valve 49 is opened and the valve 51 is closed, whereas in the milking position the valve 49 is closed and the valve 51 is opened) and the liquid flow rate 608 between the broken lines 614 and 615 is nil (or negligibly small in comparison with the flow rate during milking). Figure 11a shows the temperature values plotted against time in graph 610. The curve 612 shows the course of the temperature. In the portion before the broken line 614, the temperature remains below 40 degrees Centigrade. However, as soon as, between 614 and 615, the cleaning action has been started and the milk meter 1 is being rinsed with cleaning liquid, the temperature runs up to a value that is significantly above 40 degrees Centigrade, as represented by the course of the temperature during the peak 618.

In accordance with an embodiment, processing unit 400 receives, via the receiver 410, the temperature values of sensor 15. On the basis of these values, the processing unit 400 establishes between lines 614 and 615 that a rinsing operation is being carried out. The processing unit 400 also receives the measured liquid flow rates as represented in graph 600. Because in area 608 the measured flow rate is virtually zero (in that the stabilization chamber empties via the opened drainage opening 22 and the float no longer floats so that a flow rate of zero (or no flow rate) is measured), the processing unit establishes that the valve 100 is in the correct valve position. The condition signal that is generated by processing unit 400 indicates the corresponding condition, that is, a condition associated with a correct position of valve 100.

The condition parameter can be an analogue or digital signal that indicates the corresponding condition. If the condition signal is a digital signal, it can consist of a value correlating with a correct valve position. For example, a digital condition signal can represent a Boolean value which indicates either a correct valve position or a wrong valve position. Alternatively, the condition signal may even indicate a value that indicates, for example, a liquid flow rate, on the basis of which it can be established whether the valve, for example, is merely leaking or is not functioning at all.

In Figures 12a and 12b, the situation for an incorrectly working valve 100 is shown. In Figure 12b, the graph 700 again reflects the liquid flow rate 702 in the course of time, where during milking the milk flow waves 704 are observable. Figure 12a shows a graph 710 of the temperature 712 in the course of time, measured with sensor 15. The peak 718 is again indicative of a rinsing operation taking place between times 714 and 715. The processing unit establishes on the basis of the temperature 712 that during the peak 718 a rinsing operation is taking place, and proceeds to register the liquid flow rate in the area 708. The sensor device 12, however, shows that the measured liquid flow rate is not zero or negligible. The processing unit will therefore establish that valve 100 is not in the correct valve position (because the drainage opening 22 is apparently closed off and, as a result, the stabilization chamber starts to fill up and the float starts floating, as a result of which a flow rate is measured), and will indicate this with the condition signal.

Following a condition signal that indicates an incorrect position of the valve 100, as in Figures 12a and 12b, suitable action can presently ensue. For example, the processing unit can provide the operating opening 103 with a vacuum pressure, so that it becomes equal to the vacuum pressure upstream in the liquid path, as described above, in order to switch the valve 100 into the proper valve position. Also, it is possible that the processing unit discontinues the cleaning operation, by providing an instruction 'discontinue cleaning' to the milk meter. Furthermore, an error code or other warning signal may be generated.

As discussed before, in an alternative or additional embodiment, a cleaning action may also be established by processing unit 400 in that it, for example, receives an external instruction for starting a cleaning. Also, the processing unit 400, in order to increase reliability still further, may receive a combination of both signals so as, on the basis of both the temperature in the liquid path and reception of an external instruction, to observe the beginning and end of a cleaning action.

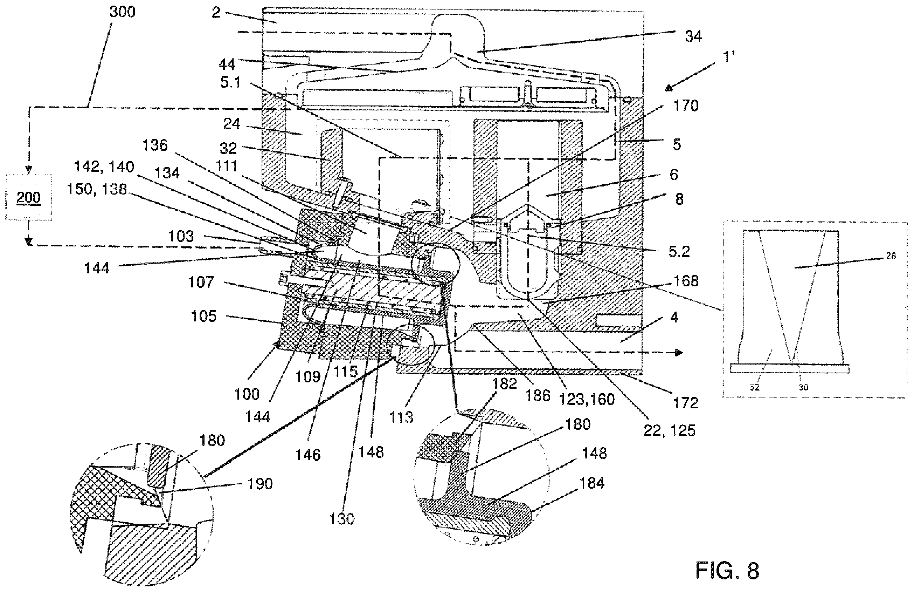

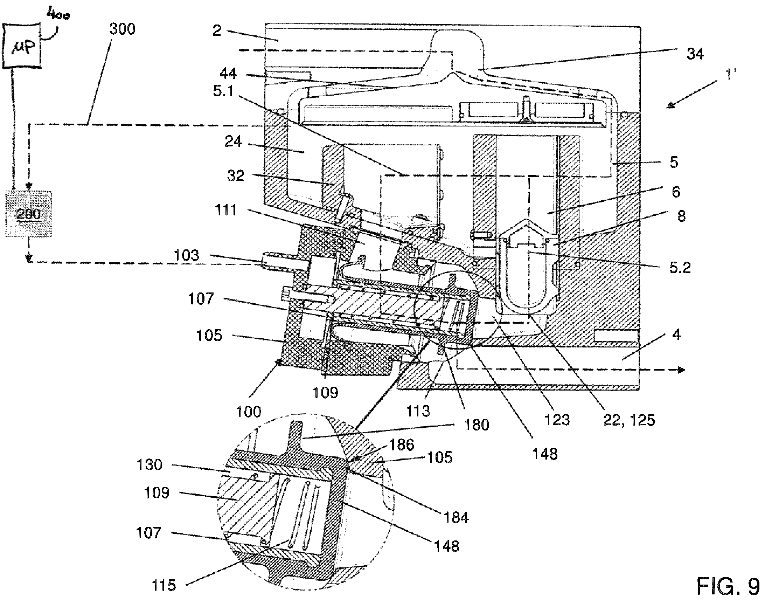

In Figures 7-9 a fourth embodiment according to the invention is disclosed, where mutually corresponding parts in Figures 1-6 and Figures 7-9 are provided with the same reference numerals. In Figures 7-9, the float 8, magnetic unit 10 and/or measuring unit 12 may be implemented in accordance with each of the above-mentioned embodiments. Figures 7-9 are especially about the particular embodiment of the valve 100 and the position where it has been incorporated within the milk meter. The valve 100 is provided with a housing 105 in which a cylinder 107 is included, a piston 109 which is included in the cylinder 107, a first inlet opening 111 and an outlet opening 113, while the piston 109 and the cylinder 107 can move relative to each other between a first and second position. The valve 100 is furthermore provided with a spring element 115 which presses the cylinder 107 and the piston 109 relative to each other in the direction of the second position. In the first position, the valve 100 takes up the first valve position where a first fluid connection between the first inlet opening 111 and the outlet opening 113 is cleared (Figure 9). In the second position, the valve takes up the second valve position where the first fluid connection between the first inlet opening 111 and the outlet opening 113 is blocked (Figure 8). Blocking does not preclude there being a drainage opening 190 present, as will be set out hereinafter.

The operating opening 103 is in fluid communication with a space 130 within the cylinder 107. The inlet opening 111 is in fluid communication with a space 132 outside the cylinder within the housing 105. A pressure at the operating opening 103 which is greater than a pressure that prevails in the space 132 present within the housing 105 and outside the cylinder 107 presses the cylinder and the piston relative to each other in the direction of the first position against the force of the spring element 115. The first predetermined value is therefore a pressure difference which generates a force which presses the cylinder and the piston relative to each other to the first position and which is greater than the force of the spring element between the cylinder and the piston. In particular, the first predetermined value is in the range of 0.4-1, preferably in the range of 0.5-0.8.

Furthermore, in particular, the second predetermined value is in the range of 0-0.5, preferably in the range of 0-0.3. Preferably, the third predetermined value is in the range of 0-0.5, preferably in the range of 0-0.3. In this example, the piston 109 is fixedly connected with the housing 105 of the valve 100. The valve is furthermore provided with a flexible ring 134 of which an outer edge 136 is connected, in particular detachably, with the housing 105 of the valve 100 and of which an inner edge 138 is connected with an outer side of the cylinder 107, such that a space 140 (which is in fluid communication with the space 130 within the cylinder) contiguous to a first side 142 of the ring is in fluid communication with the operating opening, and a space 144 (which is formed by the space 132 outside the cylinder) contiguous to a second side 146 of the ring opposite the first side is in fluid communication with the first fluid connection.

The flexible ring 134 is connected with a flexible sleeve 148 in which at least a part of the cylinder 107 is included, while an opening 150 of the sleeve 148 and the inner edge 138 of the ring are connected with each other. In this example, the flexible ring 134 and the sleeve 148 are made in one piece.

Furthermore, it holds in this example that the ring and/or the sleeve are made of silicones. In particular, the function of the spring element 115 may be taken over by the flexible ring 134. The spring element 115 can then be omitted, with the flexible ring 134 forming a spring element which presses the cylinder 107 and the piston 109 relative to each other in the direction of the second position.

In this example, it holds furthermore that the first inlet opening 111 of the valve 100 is in fluid communication with the outflow opening 28 of the buffer reservoir 24, and the outlet opening 113 of the valve 100 is in fluid communication with the outlet 4 of the milk meter, while the first part 5.1 of the liquid flow path 5 extends from the outflow opening 28 of the buffer reservoir to the outlet 4 of the milk meter. In the second valve position, the first part 5.1 of the liquid path is closed (Figure 8) in that a circumferential edge 180 of the sleeve 148 closes off on a part 182 of the housing. Though, still, effectively a drainage opening 190 is present between the circumferential edge 180 of the sleeve 148 and the part 182 of the housing. Furthermore, it is apparent from Figure 9 that in the first valve position the first part 5.1 of the liquid path 5 is open.

The valve 100 functionally also comprises a part of the housing of the milk meter and is here furthermore provided with a second inlet opening 123 which is in fluid communication with the drainage opening 22 of the stabilization chamber 6, while in the first valve position at least the second part 5.2 of the liquid path 5 is closed in that a part 184 of the sleeve 148 closes off on a part 186 of the housing 105 of the valve. In the second valve position (Figure 8), at least the second part 5.2 of the liquid path 5 is open. In the first valve position (Figure 9), the second part 5.2 of the liquid path 5 is closed. The second part of the liquid path 5, as mentioned, extends through the drainage opening of the stabilization chamber 6 to the outlet 4 of the milk meter 1, 1'.

In the first position (Figure 9), the valve takes up the first valve position where a second fluid connection between the second inlet opening 123 of the valve 100 and the outlet opening 113 of the valve 100 is closed. In the second position (Figure 8), the valve 100 takes up the second valve position where the second fluid connection between the second inlet opening 123 and the outlet opening 113 is cleared. The first fluid connection of the valve 100 hence lies in the first part 5.1 of the liquid flow path 5 of the milk meter. The second fluid connection of the valve 100 hence lies in the second part 5.2 of the liquid flow path 5 of the milk meter.

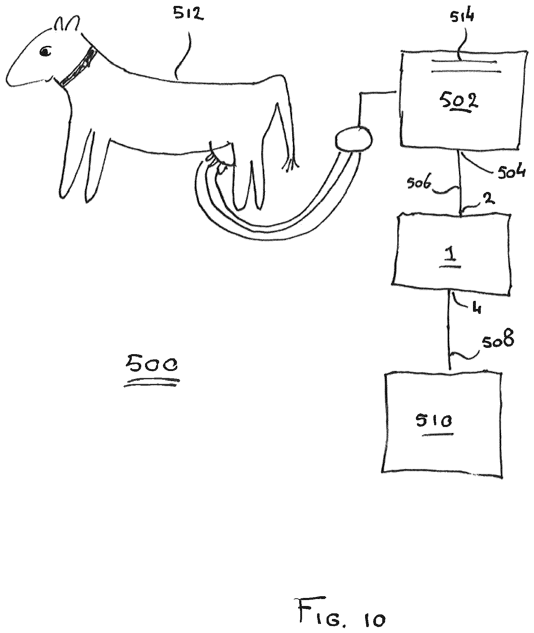

In this example, it holds furthermore that a bottom 168 of the stabilization chamber is at a lower level than a bottom 170 of the buffer reservoir and/or a bottom of the outflow channel 32. Furthermore, it holds that the valve is under the buffer reservoir and at a higher level than a lowest point 172 of the outlet. In this way, the milk meter is of compact design. As shown in Fig. 10, the disclosure also relates to a system 500 for milking animals. The system includes a milking device 502 for milking animals, known per se, and a milk meter 1 according to the invention. An outlet 504 of the device 502 is connected via a fluid connection 506 to the inlet 2 of the milk meter 1 according to the invention. An outlet 4 of the milk meter 1 is connected via a fluid connection 508 to a collecting vessel 510 for the milk from, in this example, the animal 512. In a pipe system 514 of the milking device 502 through which the milk of the animal flows to the outlet 504 prevails the vacuum pressure which, in consequence of the fluid connection 506 between the milking device 502 and the milk meter 1, also prevails in the milk meter 1, as discussed hereinabove. The milk meter 1 measures the flow rate of the milk which is delivered by the animal 512. To put it differently, the milk meter measures a flow rate of the milk flowing through (the pipe system 514 of) the milk meter.

The present invention furthermore relates to a computer program product according claim 24 with which the above-described method can be carried out with a milk meter as described above.

## Claims

1. A milk meter (1) for measuring a flow rate of a milk flow, provided with an inlet (2) to which, in use, the milk flow is supplied, an outlet (4) where the milk flow leaves the milk meter, in use, and a liquid flow path (5) extending from the inlet to the outlet,
wherein in the liquid flow path a valve system (100) is included which can selectively take up a first or second valve position where in the first valve position at least a first part (5.1) of the liquid path is open and a second part (5.2) of the liquid path is closed and in the second valve position at least the first part of the liquid path is closed and the second part of the liquid path is open,
wherein the milk meter is furthermore provided with at least one sensor device (12) for generating a sensor signal indicative of a flow rate of a liquid flow through the first part of the liquid path when the valve is in the first valve position, and a processing unit (400),
wherein the processing unit is operatively connected with the at least one sensor device for receiving the sensor signal,
**characterized in that** the processing unit is configured for carrying out the steps of:
establishing of a performance of a rinsing operation on the milk meter whereby the milk meter is rinsed with a rinsing liquid different from the milk flow while the valve system is controlled to be in the second valve position so that the rinsing liquid should flow through the second part of the liquid path and not through the first part of the liquid path; and
depending on the establishing of the rinsing operation and depending on the sensor signal, generating of a condition signal indicative of the establishing of a liquid flow through the first part of the liquid path during the performance of the rinsing operation.

2. A milk meter according to claim 1, wherein the processing unit is furthermore configured for generating a control signal for operating the valve, for placing the valve system in the second valve position depending on the condition signal.

3. A milk meter according to claim 1 or 2, further comprising means for generating a warning signal depending on the condition signal; for example, wherein the means for generating a warning signal comprise at least one element from a group comprising: an indicator lighting element, a representation unit for representing a condition notification, a mechanical telltale element, or an audio generator.

4. A milk meter according to any one of the preceding claims, wherein for establishing of the performance of the rinsing operation, at least one of:
the processing unit is configured for registering an instruction signal for actuating a cleaning function of the milk meter; or
the milk meter further comprises a temperature sensor for measuring a temperature in the liquid flow path and generating a temperature signal, wherein the processing unit is operatively connected with the temperature sensor for receiving the temperature signal for establishing of the rinsing operation.

5. A milk meter according to claim 4, wherein the milk meter further comprises a temperature sensor for measuring a temperature in the liquid flow path and generating a temperature signal, and wherein the processing unit is configured for observing temperature values depending on the temperature signal, wherein the processing unit is further configured for comparing the temperature values with a limiting value and establishing of the performance of the rinsing operation when at least one of the temperature values exceeds the limiting value.

6. A milk meter according to any one of the preceding claims, wherein for generating the condition signal, the processing unit is configured for:
when a rinsing operation is performed, comparing the sensor signal with a limiting value; and
generating the condition signal such that the condition signal indicates whether the sensor signal exceeds the limiting value during the performance of the rinsing operation.

7. A milk meter according to any one of the preceding claims, **characterized in that** the milk meter furthermore comprises a stabilization chamber which is included in the liquid flow path and a float which is in the stabilization chamber and is configured to float on milk of the milk flow that is in the stabilization chamber, wherein the milk meter is configured such that a level of milk in the stabilization chamber depends on the flow rate of the milk flow.

8. A milk meter according to claim 7, wherein the milk meter comprises a buffer reservoir which is included upstream of the stabilization chamber in the liquid flow path, wherein in a sidewall of the buffer reservoir an outflow opening is provided which extends from a lowest point of the outflow opening upwardly and which is in fluid communication with the outlet, wherein a top of the buffer reservoir comprises an inlet opening which is in fluid communication with the inlet, and wherein the buffer reservoir and the stabilization chamber are connected with each other via a fluid connection, such that the buffer reservoir, the fluid connection and the stabilization chamber, in use, function as communicating vessels so that, in use, a level of the milk in the stabilization chamber is equal to a level of the milk in the buffer reservoir.

9. A milk meter according to claim 8, **characterized in that** the first inlet opening of the valve is in fluid communication with the outflow opening of the buffer reservoir, and the outlet opening of the valve is in fluid communication with the outlet of the milk meter, wherein the first part of the liquid flow path extends from the outflow opening of the buffer reservoir to the outlet of the milk meter.

10. A milk meter according to any one of claims 7-9, **characterized in that** the valve furthermore comprises a second inlet opening which is in fluid communication with a drainage opening of the stabilization chamber, wherein in the first valve position at least a second part of the liquid path is closed and in the second valve position at least the second part of the liquid path is open, and wherein the second part of the liquid path extends through the drainage opening of the stabilization chamber to the outlet of the milk meter.

11. A milk meter according to any one of claims 7-10, **characterized in that** the sensor device is configured to measure the height of the level of the milk in the stabilization chamber.

12. A milk meter according to claim 11, **characterized in that** at least one of:
the sensor device is arranged in and/or on the float, wherein the sensor device comprises an electronic measuring unit for contactlessly measuring the height within the stabilization chamber at which the float is floating on the milk in the stabilization chamber; or
the sensor device comprises an optical sensor for determining the height of the float in the stabilization chamber.

13. A milk meter according to claim 12, wherein the sensor device is arranged in and/or on the float, wherein the sensor device comprises an electronic measuring unit for contactlessly measuring the height within the stabilization chamber at which the float is floating on the milk in the stabilization chamber,
**characterized in that** the milk meter furthermore comprises a magnetic unit for generating a magnetic field in the stabilization chamber, such that the magnetic field varies in a height direction of the stabilization chamber, wherein the electronic measuring unit is configured for measuring the strength of the magnetic field, wherein the measured magnetic field strength of the magnetic field is a measure of the height within the stabilization chamber at which the float is floating on the milk in the stabilization chamber and whereby hence the measured field strength of the magnetic field is a measure of the flow rate of the milk flow.

14. A milk meter according to claim 13, **characterized in that** the electronic measuring unit furthermore comprises a sensor such as a Hall sensor for detecting the magnetic field and a processor for processing measuring signals from the sensor to obtain information about the flow rate of the milk flow.

15. A milk meter according to any one of the preceding claims, **characterized in that** the valve system comprises a valve with a first valve inlet, a second valve inlet and a valve outlet, wherein in the first valve position the first valve inlet is, and the second valve inlet is not, in fluid communication with the valve outlet, and wherein in the second valve position the second valve inlet is, and the first valve inlet is not, in fluid communication with the valve outlet, wherein the first part of the liquid path extends from the first valve inlet to the valve outlet and the second part of the liquid path extends from the second valve inlet to the valve outlet.

16. A method for operating a milk meter (1),
wherein the milk meter is configured for measuring a flow rate of a milk flow, and wherein the milk meter comprises an inlet (2) for supplying the milk flow, an outlet (4) for discharging the milk flow, and a liquid flow path (5) which extends from the inlet to the outlet,
wherein the milk meter furthermore comprises:
a valve system (100) included in the liquid flow path and which can selectively take up a first or second valve position where in the first valve position at least a first part (5.1) of the liquid path is open and a second part (5.2) of the liquid path is closed and in the second valve position at least the first part of the liquid path is closed and the second part of the liquid path is open;
at least one sensor device (12) for generating a sensor signal indicative of a flow rate of a liquid flow through the first part of the liquid path when the valve system is in the first valve position; and
a processing unit (400),
wherein the processing unit is operatively connected with the at least one sensor device for receiving the sensor signal;
**characterized in that** the method comprises the steps of:
establishing, by the processing unit, of a performance of a rinsing operation on the milk meter whereby the milk meter is rinsed with a rinsing liquid different from the milk flow while the valve system is controlled to be in the second valve position so that the rinsing liquid should flow through the second part of the liquid path and not through the first part of the liquid path;
depending on the establishing of the rinsing operation and depending on the sensor signal, generating, by the processing unit, of a condition signal indicative of the establishing of a liquid flow through the first part of the liquid path during the performance of the rinsing operation.

17. A method according to claim 16, further comprising generating by the processing unit of a control signal for operating the valve system, for placing the valve in the second valve position depending on the condition signal.

18. A method according to claim 16 or 17, further comprising generating a warning signal depending on the condition signal.

19. A method according to any one of claims 16-18, wherein the step of establishing the performance of a rinsing operation further comprises at least one step of:
registering, by the processing unit, of an instruction signal for actuating a cleaning function of the milk meter; or
observing by the processing unit of temperature values depending on a temperature signal, wherein the milk meter comprises a temperature sensor for measuring a temperature in the liquid flow path and generating the temperature signal, wherein the processing unit is operatively connected with the temperature sensor for receiving the temperature signal for establishing the rinsing operation, and wherein the processing unit is further configured for comparing the temperature values with a limiting value and establishing the performance of the rinsing operation when at least one of the temperature values exceeds the limiting value.

20. A method according to claim 19, comprising the step of observing by the processing unit of the temperature values depending on the temperature signal, wherein at least one of:
the limiting value is greater than 37 degrees Centigrade, preferably greater than 38 degrees Centigrade, more preferably is between 38 degrees Centigrade and 50 degrees Centigrade, such as 40 degrees Centigrade; or
observing by the processing unit of the temperature values periodically.

21. A method according to any one of claims 16-20, wherein the step of generating the condition signal comprises:
when a rinsing operation is performed, comparing by the processing unit of the sensor signal with a limiting value; and
generating the condition signal such that the condition signal indicates whether the sensor signal exceeds the limiting value during the performance of the rinsing operation.

22. A method according to any one of claims 16-21, wherein the milk meter furthermore comprises a stabilization chamber which is included in the liquid flow path and a float which is in the stabilization chamber and is configured to float on milk of the milk flow that is in the stabilization chamber, wherein the milk meter is configured such that a level of milk in the stabilization chamber depends on the flow rate of the milk flow; and
wherein the step of generating the condition signal comprises observing by the processing unit of the height of the float in the stabilization chamber, wherein the condition signal indicates the presence of a liquid flow during the performance of the rinsing operation when the height of the float is above a limiting value.

23. A method according to any one of claims 16-22, wherein the valve system comprises a valve with a first valve inlet, a second valve inlet and a valve outlet, wherein in the first valve position the first valve inlet is, and the second valve inlet is not, in fluid communication with the valve outlet, and wherein in the second valve position the second valve inlet is, and the first valve inlet is not, in fluid communication with the valve outlet, wherein the first part of the liquid path extends from the first valve inlet to the valve outlet and the second part of the liquid path extends from the second valve inlet to the valve outlet.

24. Computer program product comprising instructions for causing a processing unit (400) of a milk meter (1) according to one or more of claims 1-15 to have a method according to one of more of claims 16-23 executed.

## Patentansprüche

1. Milchmengenmesser (1)
zur Messung der Durchflussrate eines Milchstroms, der mit einem Einlass (2) versehen ist, dem in Betrieb der Milchstrom zugeführt wird, einem Auslass (4),
wo der Milchstrom den Milchmengenmesser in Betrieb verlässt, und einem Flüssigkeitsstrompfad (5), der sich vom Einlass zum Auslass erstreckt,
wobei der Flüssigkeitsstrompfad ein Ventilsystem (100) einschließt, das selektiv eine erste oder zweite Ventilstellung einnehmen kann, wobei in der ersten Ventilstellung wenigstens ein erster Teil (5.1) des Flüssigkeitspfads geöffnet und ein zweiter Teil (5.2) des Flüssigkeitspfads geschlossen ist, und in der zweiten Ventilstellung wenigstens der erste Teil des Flüssigkeitspfads geschlossen und der zweite Teil des Flüssigkeitspfads geöffnet ist,
wobei der Milchmengenmesser ferner mit wenigstens einer Sensorvorrichtung (12) zum Erzeugen eines Sensorsignals, das eine Durchflussrate eines Flüssigkeitsstroms durch den ersten Teil des Flüssigkeitspfads angibt, wenn sich das Ventil in der ersten Ventilstellung befindet, versehen ist, und
eine Verarbeitungseinheit (400),
wobei die Verarbeitungseinheit operativ mit der wenigstens einen Sensorvorrichtung zum Empfangen des Sensorsignals verbunden ist, **dadurch gekennzeichnet, dass** die Verarbeitungseinheit zum Durchführen der Schritte eingerichtet ist:
Einrichten der Durchführung eines Spülvorgangs am Milchmengenmesser, bei dem der Milchmengenmesser mit einer Spülflüssigkeit gespült wird, die kein Milchstrom ist, während das Ventilsystem so gesteuert wird, dass es sich in der zweiten Ventilstellung befindet, so dass die Spülflüssigkeit durch den zweiten Teil des Flüssigkeitspfads und nicht durch den ersten Teil des Flüssigkeitspfads strömen sollte; und
abhängig von dem Einrichten des Spülvorgangs und abhängig vom Sensorsignal das Erzeugen eines Zustandssignals, das das Einrichten eines Flüssigkeitsstroms durch den ersten Teil des Flüssigkeitspfads während der Durchführung des Spülvorgangs angibt.

2. Milchmengenmesser nach Anspruch 1, wobei die Verarbeitungseinheit ferner dazu eingerichtet ist, abhängig von dem Zustandssignal ein Steuersignal zum Betreiben des Ventils zu erzeugen, um das Ventilsystem in die zweite Ventilstellung zu bringen.

3. Milchmengenmesser nach Anspruch 1 oder 2, der ferner Mittel zum Erzeugen eines Warnsignals abhängig von dem Zustandssignal umfasst; wobei die Mittel zum Erzeugen eines Warnsignals zum Beispiel wenigstens ein Element aus einer Gruppe umfassen, die umfasst: ein Anzeigebeleuchtungselement, eine Darstellungseinheit zum Darstellen einer Zustandsmeldung, ein mechanisches Anzeigeelement oder einen Audiogenerator.

4. Milchmengenmesser nach einem der vorhergehenden Ansprüche, wobei zum Einrichten der Durchführung des Spülvorgangs wenigstens:
die Verarbeitungseinheit dazu eingerichtet ist, ein Befehlssignal zur Betätigung einer Reinigungsfunktion des Milchmengenmessers zu registrieren; und/oder
der Milchmengenmesser ferner einen Temperatursensor zur Messung einer Temperatur im Flüssigkeitsstrompfad und zum Erzeugen eines Temperatursignals umfasst, wobei die Verarbeitungseinheit operativ mit dem Temperatursensor zum Empfangen des Temperatursignals zum Einrichten des Spülvorgangs verbunden ist.

5. Milchmengenmesser nach Anspruch 4, wobei der Milchmengenmesser ferner einen Temperatursensor zum Messen einer Temperatur im Flüssigkeitsstrompfad und zum Erzeugen eines Temperatursignals umfasst, und wobei die Verarbeitungseinheit dazu eingerichtet ist, Temperaturwerte abhängig von dem Temperatursignal zu beobachten, wobei die Verarbeitungseinheit ferner dazu eingerichtet ist, die Temperaturwerte mit einem Grenzwert zu vergleichen und die der Durchführung des Spülvorgangs einzurichten, wenn wenigstens einer der Temperaturwerte den Grenzwert überschreitet.

6. Milchmengenmesser nach einem der vorhergehenden Ansprüche, wobei zum Erzeugen des Zustandssignals die Verarbeitungseinheit dazu eingerichtet ist:
wenn ein Spülvorgang durchgeführt wird, das Sensorsignal mit einem Grenzwert zu vergleichen, und
das Zustandssignal zu erzeugen, so dass das Zustandssignal angibt, ob das Sensorsignal während der Durchführung des Spülvorgangs den Grenzwert überschreitet.

7. Milchmengenmesser nach einem der vorhergehenden Ansprüche, **dadurch gekennzeichnet, dass** der Milchmengenmesser ferner eine Stabilisierungskammer umfasst, die in den Flüssigkeitsstrompfad inkludiert ist, und einen Schwimmer, der sich in der Stabilisierungskammer befindet und dazu eingerichtet ist, auf der Milch des Milchstromes zu schwimmen, der sich in der Stabilisierungskammer befindet, wobei der Milchmengenmesser so eingerichtet ist, dass ein Milchstand in der Stabilisierungskammer von der Durchflussrate des Milchstromes abhängt.

8. Milchmengenmesser nach Anspruch 7, wobei der Milchmengenmesser einen Pufferbehälter umfasst, der stromaufwärts der Stabilisierungskammer in den Flüssigkeitsstrompfad eingeschlossen ist, wobei in einer Seitenwand des Speicherbehälters eine Auslassöffnung bereitgestellt ist, die sich von einer tiefsten Stelle der Auslassöffnung nach oben erstreckt und die in Fluidverbindung mit dem Auslass steht, wobei eine Oberseite des Speicherbehälters eine Einlassöffnung umfasst, die in Fluidverbindung mit dem Einlass steht, und wobei der Pufferbehälter und die Stabilisierungskammer über einen Fluidanschluss miteinander verbunden sind, so dass der Pufferbehälter, der Fluidanschluss und die Stabilisierungskammer in Betrieb als Verbindungsgefäße fungieren, so dass in Betrieb ein Milchstand in der Stabilisierungskammer einem Milchstand im Pufferbehälter entspricht.

9. Milchmengenmesser nach Anspruch 8, **dadurch gekennzeichnet, dass** die erste Einlassöffnung des Ventils in Fluidverbindung mit der Auslassöffnung des Pufferbehälters steht und die Auslassöffnung des Ventils in Fluidverbindung mit dem Auslass des Milchmengenmessers steht, wobei sich der erste Teil des Flüssigkeitsstrompfads von der Auslassöffnung des Speicherbehälters zum Auslass des Milchmengenmessers erstreckt.

10. Milchmengenmesser nach einem der Ansprüche 7 bis 9, **dadurch gekennzeichnet, dass** das Ventil ferner eine zweite Einlassöffnung umfasst, die in Fluidverbindung mit einer Ablassöffnung der Stabilisierungskammer steht, wobei in der ersten Ventilstellung wenigstens ein zweiter Teil des Flüssigkeitspfads geschlossen und in der zweiten Ventilstellung wenigstens der zweite Teil des Flüssigkeitspfads geöffnet ist, und wobei sich der zweite Teil des Flüssigkeitspfads durch die Ablassöffnung der Stabilisierungskammer bis zum Auslass des Milchmengenmessers erstreckt.

11. Milchmengenmesser nach einem der Ansprüche 7 bis 10, **dadurch gekennzeichnet, dass** die Sensorvorrichtung dazu eingerichtet ist, die Höhe des Milchstands in der Stabilisierungskammer zu messen.

12. Milchmengenmesser nach Anspruch 11, **dadurch gekennzeichnet, dass** wenigstens:
die Sensorvorrichtung in und/oder an dem Schwimmer angeordnet ist, wobei die Sensorvorrichtung eine elektronische Messeinheit zur berührungslosen Messung der Höhe innerhalb der Stabilisierungskammer umfasst, an der der Schwimmer auf der Milch in der Stabilisierungskammer schwimmt; und/oder
die Sensorvorrichtung einen optischen Sensor zur Bestimmung der Höhe des Schwimmers in der Stabilisierungskammer umfasst.

13. Milchmengenmesser nach Anspruch 12, wobei die Sensorvorrichtung in und/oder auf dem Schwimmer angeordnet ist, wobei die Sensorvorrichtung eine elektronische Messeinheit zur berührungslosen Messung der Höhe innerhalb der Stabilisierungskammer, an der der Schwimmer auf der Milch in der Stabilisierungskammer schwimmt, umfasst,
**dadurch gekennzeichnet, dass** der Milchmengenmesser ferner eine Magneteinheit zum Erzeugen eines Magnetfelds in der Stabilisierungskammer umfasst, so dass das Magnetfeld in einer Höhenrichtung der Stabilisierungskammer variiert, wobei die elektronische Messeinheit dazu eingerichtet ist, die Stärke des Magnetfelds zu messen, wobei die gemessene Magnetfeldstärke des Magnetfelds ein Maß für die Höhe innerhalb der Stabilisierungskammer ist, bei der der Schwimmer in der Stabilisierungskammer auf der Milch schwimmt und wodurch die gemessene Feldstärke des Magnetfelds ein Maß für die Durchflussrate des Milchstromes ist.

14. Milchmengenmesser nach Anspruch 13, **dadurch gekennzeichnet, dass** die elektronische Messeinheit ferner einen Sensor wie einen Hall-Sensor zur Erfassung des Magnetfelds und einen Prozessor zur Verarbeitung von Messsignalen des Sensors zum Erhalten von Informationen über die Durchflussrate des Milchstromes umfasst.

15. Milchmengenmesser nach einem der vorhergehenden Ansprüche, **dadurch gekennzeichnet, dass** das Ventilsystem ein Ventil mit einem ersten Ventileinlass, einem zweiten Ventileinlass und einem Ventilauslass umfasst, wobei in der ersten Ventilstellung der erste Ventileinlass in Fluidverbindung und der zweite Ventileinlass nicht in Fluidverbindung mit dem Ventilauslass ist, und wobei in der zweiten Ventilstellung der zweite Ventileinlass in Fluidverbindung und der erste Ventileinlass nicht in Fluidverbindung mit dem Ventilauslass ist, wobei sich der erste Teil des Flüssigkeitspfads vom ersten Ventileinlass zum Ventilauslass erstreckt und der zweite Teil des Flüssigkeitspfads vom zweiten Ventileinlass zum Ventilauslass erstreckt.

16. Verfahren zum Betreiben eines Milchmengenmessers (1), wobei der Milchmengenmesser dazu eingerichtet ist, die Durchflussrate eines Milchstromes zu messen, und wobei der Milchmengenmesser einen Einlass (2) zum Zuführen des Milchstromes, einen Auslass (4) zum Ablassen des Milchstromes und einen Flüssigkeitsstrompfad (5) umfasst,
der sich vom Einlass bis zum Auslass erstreckt,
wobei der Milchmengenmesser ferner umfasst:
ein Ventilsystem (100), das in den Flüssigkeitsstrompfad eingeschlossen ist und das selektiv eine erste oder zweite Ventilstellung einnehmen kann, wobei in der ersten Ventilstellung wenigstens ein erster Teil (5.1) des Flüssigkeitspfads offen ist und ein zweiter Teil (5.2) des Flüssigkeitspfads geschlossen ist und in der zweiten Ventilstellung wenigstens der erste Teil des Flüssigkeitspfads geschlossen und der zweite Teil des Flüssigkeitspfads geöffnet ist;
wenigstens eine Sensorvorrichtung (12) zum Erzeugen eines Sensorsignals, das eine Durchflussrate eines Flüssigkeitsstroms durch den ersten Teil des Flüssigkeitspfads angibt, wenn sich das Ventilsystem in der ersten Ventilstellung befindet; und
eine Verarbeitungseinheit (400),
wobei die Verarbeitungseinheit operativ mit der wenigstens einen Sensorvorrichtung zum Empfangen des Sensorsignals verbunden ist;
**dadurch gekennzeichnet, dass** das Verfahren die Schritte umfasst:
Einrichten einer Durchführung eines Spülvorgangs durch die Verarbeitungseinheit an dem Milchmengenmesser, wobei der Milchmengenmesser mit einer Spülflüssigkeit gespült wird, die kein Milchstrom ist, während das Ventilsystem so gesteuert wird, dass es sich in der zweiten Ventilstellung befindet, so dass die Spülflüssigkeit durch den zweiten Teil des Flüssigkeitspfads und nicht durch den ersten Teil des Flüssigkeitspfads strömen sollte;
abhängig von dem Einrichten des Spülvorgangs und abhängig vom Sensorsignal das Erzeugen durch die Verarbeitungseinheit eines Zustandssignals, das das Einrichten eines Flüssigkeitsstroms durch den ersten Teil des Flüssigkeitspfads während der Durchführung des Spülvorgangs angibt.

17. Verfahren nach Anspruch 16, ferner umfassend das Erzeugen eines Steuersignals zum Betreiben des Ventilsystems durch die Verarbeitungseinheit, um das Ventil abhängig von dem Zustandssignal in die zweite Ventilstellung zu bringen.

18. Verfahren nach Anspruch 16 oder 17, ferner umfassend das Erzeugen eines Warnsignals abhängig von dem Zustandssignal.

19. Verfahren nach einem der Ansprüche 16 bis 18, wobei der Schritt des Einrichtens der Durchführung eines Spülvorgangs ferner wenigstens einen Schritt umfasst:
Registrieren eines Befehlssignals zur Betätigung einer Reinigungsfunktion des Milchmengenmessers durch die Verarbeitungseinheit; oder
Beobachten von Temperaturwerten durch die Verarbeitungseinheit abhängig von einem Temperatursignal, wobei der Milchmengenmesser einen Temperatursensor zur Messung einer Temperatur im Flüssigkeitsstrompfad und zum Erzeugen des Temperatursignals umfasst, wobei die Verarbeitungseinheit mit dem Temperatursensor zum Empfangen des Temperatursignals zum Einrichten des Spülvorgangs operativ verbunden ist, und wobei die Verarbeitungseinheit ferner dazu eingerichtet ist, die Temperaturwerte mit einem Grenzwert zu vergleichen und die Durchführung des Spülvorgangs einzurichten, wenn wenigstens einer der Temperaturwerte den Grenzwert überschreitet.

20. Verfahren nach Anspruch 19, das den Schritt des Beobachtens der Temperaturwerte abhängig von dem Temperatursignal durch die Verarbeitungseinheit umfasst, wobei wenigstens:
der Grenzwert größer als 37 Grad Celsius, vorzugsweise größer als 38 Grad Celsius ist, bevorzugter zwischen 38 Grad Celsius und 50 Grad Celsius liegt, wie 40 Grad Celsius, und/oder
die Temperaturwerte durch die Verarbeitungseinheit periodisch beobachtet werden.

21. Verfahren nach einem der Ansprüche 16 bis 20, wobei der Schritt des Erzeugens des Zustandssignals umfasst:
Vergleichen, wenn ein Spülvorgang durchgeführt wird, durch die Verarbeitungseinheit des Sensorsignals mit einem Grenzwert; und
das Zustandssignal zu erzeugen, so dass das Zustandssignal angibt, ob das Sensorsignal während der Durchführung des Spülvorgangs den Grenzwert überschreitet.

22. Verfahren nach einem der Ansprüche 16 bis 21, wobei der Milchmengenmesser ferner eine Stabilisierungskammer umfasst, die in den Flüssigkeitsstrompfad eingeschlossen ist, und einen Schwimmer, der sich in der Stabilisierungskammer befindet und dazu eingerichtet ist, auf der Milch des Milchstromes zu schwimmen, der sich in der Stabilisierungskammer befindet, wobei der Milchmengenmesser so eingerichtet ist, dass ein Milchstand in der Stabilisierungskammer von der Durchflussrate des Milchstromes abhängt; und
wobei der Schritt des Erzeugens des Zustandssignals das Beobachten der Höhe des Schwimmers in der Stabilisierungskammer durch die Verarbeitungseinheit umfasst, wobei das Zustandssignal das Vorhandensein eines Flüssigkeitsstroms während der Durchführung des Spülvorgangs angibt, wenn die Höhe des Schwimmers über einem Grenzwert liegt.

23. Verfahren nach einem der Ansprüche 16 bis 22, wobei das Ventilsystem ein Ventil mit einem ersten Ventileinlass, einem zweiten Ventileinlass und einem Ventilauslass umfasst, wobei in der ersten Ventilstellung der erste Ventileinlass in Fluidverbindung und der zweite Ventileinlass nicht in Fluidverbindung mit dem Ventilauslass ist, und wobei in der zweiten Ventilstellung der zweite Ventileinlass in Fluidverbindung und der erste Ventileinlass nicht in Fluidverbindung mit dem Ventilauslass ist, wobei sich der erste Teil des Flüssigkeitspfads vom ersten Ventileinlass zum Ventilauslass erstreckt und der zweite Teil des Flüssigkeitspfads vom zweiten Ventileinlass zum Ventilauslass erstreckt.

24. Computerprogrammprodukt, das Befehle zum Bewirken umfasst, dass eine Verarbeitungseinheit (400) eines Milchmengenmessers (1) nach einem oder mehreren der Ansprüche 1 bis 15 ein Verfahren nach einem oder mehreren der Ansprüche 16 bis 23 ausführen lässt.

## Revendications

1. Compteur à lait (1) pour mesurer le débit d'un écoulement de lait, munie d'une entrée (2) à laquelle, lors de l'utilisation, le flux de lait est fourni, une sortie (4) où le flux de lait quitte le compteur à lait, en utilisation, et un trajet d'écoulement de liquide (5) s'étendant de l'entrée à la sortie,
dans lequel, dans le trajet d'écoulement de liquide, un système de vanne (100) est inclus qui peut occuper sélectivement une première ou une deuxième position de vanne où, dans la première position de vanne, au moins une première partie (5.1) du trajet de liquide est ouverte et une deuxième une partie (5.2 ) du trajet du liquide est fermée et dans la deuxième position de vanne au moins la première partie du trajet du liquide est fermée et la deuxième partie du trajet du liquide est ouverte, le compteur à lait étant également muni d'au moins un dispositif de capteur (12) pour générer un signal de capteur indicatif d'un débit d'un écoulement de liquide à travers la première partie du trajet de liquide lorsque la vanne est dans la première position de la vanne, et
une unité de traitement (400), dans lequel l'unité de traitement est fonctionnellement connectée à l'au moins un dispositif de capteur pour recevoir le signal de capteur, **caractérisé en ce que** l'unité de traitement est configurée pour exécuter les étapes de :
l'établissement d'une exécution d'une opération de rinçage sur le compteur à lait dans laquelle le compteur à lait est rincé avec un liquide de rinçage différent du débit de lait tandis que le système de vanne est commandé pour être dans la deuxième position de vanne de sorte que le liquide de rinçage doit s'écouler à travers la deuxième partie du trajet du liquide et non à travers la première partie du trajet du liquide ; et
en fonction de l'établissement de l'opération de rinçage et en fonction du signal du capteur, la génération d'un signal d'état indicatif de l'établissement d'un écoulement de liquide à travers la première partie du trajet de liquide pendant l'exécution de l'opération de rinçage.

2. Compteur à lait selon la revendication 1, dans lequel l'unité de traitement est également configurée pour générer un signal de commande pour actionner la vanne, pour placer le système de vanne dans la deuxième position de vanne en fonction du signal d'état.

3. Compteur à lait selon la revendication 1 ou 2, comprenant en outre des moyens pour générer un signal d'avertissement en fonction du signal d'état ; par exemple, où les moyens pour générer un signal d'alerte comprennent au moins un élément parmi un groupe comprenant : un élément lumineux de signalisation, une unité de représentation pour représenter une notification d'état, un élément témoin mécanique, ou un générateur audio.

4. Compteur à lait selon l'une quelconque des revendications précédentes, dans lequel pour établir la performance de l'opération de rinçage, il y a au moins l'un parmi :
l'unité de traitement est configurée pour enregistrer un signal d'instruction pour exécuter une fonction de nettoyage du compteur à lait ; ou
le compteur à lait comprend en outre un capteur de température pour mesurer une température dans le trajet d'écoulement de liquide et générer un signal de température, dans lequel l'unité de traitement est fonctionnellement connectée au capteur de température pour recevoir le signal de température pour établir l'opération de rinçage.

5. Compteur à lait selon la revendication 4, dans lequel le compteur à lait comprend en outre un capteur de température pour mesurer une température dans le trajet d'écoulement de liquide et générer un signal de température, et dans lequel l'unité de traitement est configurée pour observer des valeurs de température en fonction de la signal de température, l'unité de traitement étant en outre configurée pour comparer les valeurs de température à une valeur limite et établir la performance de l'opération de rinçage lorsqu'au moins une des valeurs de température dépasse la valeur limite.

6. Compteur à lait selon l'une quelconque des revendications précédentes, dans lequel pour générer le signal d'état, l'unité de traitement est configurée pour :
lorsqu'une opération de rinçage est effectuée, les étapes consistant à comparer le signal du capteur à une valeur limite ; et
générer le signal d'état de sorte que le signal d'état indique si le signal du capteur dépasse la valeur limite pendant la réalisation de l'opération de rinçage.

7. Compteur à lait selon l'une quelconque des revendications précédentes, **caractérisé en ce que** le compteur à lait comprend en outre une chambre de stabilisation qui est incluse dans le trajet d'écoulement du liquide et un flotteur qui est dans la chambre de stabilisation et est configuré pour flotter sur le lait du débit de lait qui se trouve dans la chambre de stabilisation, le compteur à lait étant configuré de sorte qu'un niveau de lait dans la chambre de stabilisation dépend du débit du flux de lait.

8. Compteur à lait selon la revendication 7, dans lequel le compteur à lait comprend un réservoir tampon qui est inclus en amont de la chambre de stabilisation dans le trajet d'écoulement de liquide, dans lequel dans une paroi latérale du réservoir tampon est prévue une ouverture de sortie qui s'étend depuis un point le plus bas de l'ouverture de sortie vers le haut et qui est en communication fluidique avec la sortie, dans lequel un sommet du réservoir tampon comprend une ouverture d'entrée qui est en communication fluidique avec l'entrée, et dans lequel le réservoir tampon et la chambre de stabilisation sont reliés l'un à l'autre via une connexion fluidique, de sorte que le réservoir tampon, la connexion fluidique et la chambre de stabilisation, en utilisation, fonctionnent comme des vases communicants de sorte que, en utilisation, un niveau de lait dans la chambre de stabilisation est égal à un niveau de lait dans le réservoir tampon.

9. Compteur à lait selon la revendication 8, **caractérisé en ce que** la première ouverture d'entrée de la vanne est en communication fluidique avec l'ouverture de sortie du réservoir tampon, et l'ouverture de sortie de la vanne est en communication fluidique avec la sortie du compteur de lait, dans lequel la première partie du trajet d'écoulement de liquide s'étend depuis l'ouverture de sortie du réservoir tampon à la sortie du compteur à lait.

10. Compteur à lait selon l'une quelconque des revendications 7 à 9, **caractérisé en ce que** la vanne comprend également une deuxième ouverture d'entrée qui est en communication fluidique avec une ouverture de drainage de la chambre de stabilisation, dans lequel dans la première position de vanne au moins une deuxième partie du trajet de liquide est fermée et dans la deuxième position de vanne au moins la deuxième partie du trajet de liquide est ouverte, et dans lequel la deuxième partie du trajet de liquide s'étend à travers l'ouverture de drainage de la chambre de stabilisation jusqu'à la sortie du compteur à lait.

11. Compteur à lait selon l'une quelconque des revendications 7 à 10, **caractérisé en ce que** le dispositif capteur est configuré pour mesurer la hauteur du niveau du lait dans la chambre de stabilisation.

12. Compteur à lait selon la revendication 11, **caractérisé par** au moins l'un parmi :
le dispositif capteur est agencé dans et/ou sur le flotteur, dans lequel le dispositif capteur comprend une unité de mesure électronique pour mesurer sans contact la hauteur à l'intérieur de la chambre de stabilisation à laquelle le flotteur flotte sur le lait dans la chambre de stabilisation ; ou
le dispositif capteur comprend un capteur optique pour déterminer la hauteur du flotteur dans la chambre de stabilisation.

13. Compteur à lait selon la revendication 12, dans lequel le dispositif capteur est agencé dans et/ou sur le flotteur, dans lequel le dispositif capteur comprend une unité de mesure électronique pour mesurer sans contact la hauteur à l'intérieur de la chambre de stabilisation à laquelle le flotteur flotte sur le lait dans la chambre de stabilisation,
**caractérisé en ce que** le compteur à lait comprend également une unité magnétique pour générer un champ magnétique dans la chambre de stabilisation, de sorte que le champ magnétique varie dans une direction de hauteur de la chambre de stabilisation, dans lequel l'unité de mesure électronique est configurée pour mesurer l'intensité du champ magnétique, dans lequel l'intensité du champ magnétique mesurée est une mesure de la hauteur à l'intérieur de la chambre de stabilisation au niveau de laquelle le flotteur flotte sur le lait dans la chambre de stabilisation et donc l'intensité de champ mesurée du champ magnétique est une mesure du débit du flux de lait.

14. Compteur à lait selon la revendication 13, **caractérisé en ce que** l'unité de mesure électronique comprend également un capteur tel qu'un capteur Hall pour détecter le champ magnétique et un processeur pour traiter les signaux de mesure provenant du capteur pour obtenir des informations sur le débit du flux de lait.

15. Compteur à lait selon l'une quelconque des revendications précédentes,
**caractérisé en ce que** le système de vanne comprend une vanne avec une première entrée de vanne, une deuxième entrée de vanne et une sortie de vanne, dans lequel dans la première position de vanne la première entrée de vanne est, et la deuxième entrée de vanne n'est pas, en communication fluidique avec la sortie de vanne, et dans lequel, dans la deuxième position de vanne, la deuxième entrée de vanne est, et la première entrée de vanne n'est pas, en communication fluidique avec la sortie de vanne, la première partie du trajet de liquide s'étendant de la première entrée de vanne à la sortie de vanne et la deuxième partie du trajet de liquide s'étendant de la deuxième entrée de vanne à la sortie de vanne.

16. Procédé de fonctionnement d'un compteur à lait (1), dans lequel le compteur à lait est configuré pour mesurer un débit d'un flux de lait, et dans lequel le compteur à lait comprend une entrée (2) pour fournir le flux de lait, une sortie (4) pour décharger le flux de lait, et un trajet d'écoulement de liquide (5) qui s'étend de l'entrée vers la sortie, dans lequel le compteur à lait comprend également :
un système de vanne (100) inclus dans le trajet d'écoulement de liquide et qui peut occuper sélectivement une première ou une deuxième position de vanne où, dans la première position de vanne, au moins une première partie (5.1) du trajet de liquide est ouverte et une deuxième partie (5.2) du trajet de liquide est fermée et dans la deuxième position de vanne au moins la première partie du trajet de liquide est fermée et la deuxième partie du trajet de liquide est ouverte;
au moins un dispositif de capteur (12) pour générer un signal de capteur indicatif d'un débit d'un écoulement de liquide à travers la première partie du trajet de liquide lorsque le système de vanne est dans la première position de vanne ; et
une unité de traitement (400), dans lequel l'unité de traitement connectée fonctionnellement à l'au moins un dispositif capteur pour recevoir le signal de capteur ; **caractérisé en ce que** le procédé comprend les étapes consistant à :
établir, par l'unité de traitement, une exécution d'une opération de rinçage sur le compteur à lait, le compteur à lait étant rincé avec un liquide de rinçage différent du débit de lait tandis que le système de vannes est commandé pour être dans la deuxième position de vanne de sorte que le liquide de rinçage doit s'écouler à travers la deuxième partie du trajet de liquide et non à travers la première partie du trajet de liquide ;
en fonction de l'établissement de l'opération de rinçage et en fonction du signal du capteur, générer, par l'unité de traitement, un signal d'état indicatif de l'établissement d'un écoulement de liquide à travers la première partie du trajet de liquide pendant l'exécution de l'opération de rinçage.

17. Procédé selon la revendication 16, comprenant en outre la génération par l'unité de traitement d'un signal de commande pour faire fonctionner le système de vanne, pour placer la vanne dans la deuxième position de vanne en fonction du signal d'état.

18. Procédé selon la revendication 16 ou 17, comprenant en outre la génération d'un signal d'avertissement en fonction du signal d'état.

19. Procédé selon l'une quelconque des revendications 16 à 18, dans lequel l'étape d'établissement de la performance d'une opération de rinçage comprend en outre au moins une étape consistant à :
enregistrer, par l'unité de traitement, un signal d'instruction pour effectuer une fonction de nettoyage du compteur à lait ; ou
observer par l'unité de traitement de valeurs de température en fonction d'un signal de température, dans lequel le compteur à lait comprend un capteur de e température pour mesurer une température dans le trajet d'écoulement de liquide et générer le signal de température, dans lequel l'unité de traitement est fonctionnellement connectée au capteur de température pour recevoir le signal de température pour établir l'opération de rinçage, et dans lequel l'unité de traitement est en outre configurée pour comparer les valeurs de température avec une valeur limite et établir la performance de l'opération de rinçage lorsqu'au moins une des valeurs de température dépasse la valeur limite.

20. Procédé selon la revendication 19, comprenant l'étape d'observation par l'unité de traitement des valeurs de température en fonction du signal de température, dans lequel il y a au moins l'un parmi :
la valeur limite est supérieure à 37 degrés centigrades, de préférence supérieure à 38 degrés centigrades, plus préférablement comprise entre 38 degrés centigrades et 50 degrés centigrades, telle que 40 degrés centigrade; ou
l'observation par l'unité de traitement des valeurs de température périodiquement.

21. Procédé selon l'une quelconque des revendications 16 à 20, dans lequel l'étape de génération du signal d'état comprend les étapes consistant à :
lorsqu'une opération de rinçage est effectuée, comparer par l'unité de traitement le signal du capteur avec une valeur limite ; et
générer le signal d'état de sorte que le signal d'état indique si le signal du capteur dépasse la valeur limite pendant l'exécution de l'opération de rinçage.

22. Procédé selon l'une quelconque des revendications 16 à 21, dans lequel le compteur à lait comprend en outre une chambre de stabilisation qui est incluse dans le trajet d'écoulement de liquide et un flotteur qui se trouve dans la chambre de stabilisation et est configuré pour flotter sur le lait du flux de lait qui se trouve dans la chambre de stabilisation, le compteur à lait étant configuré de telle sorte qu'un niveau de lait dans la chambre de stabilisation dépend du débit du flux de lait ; et
dans lequel l'étape de génération du signal d'état comprend l'observation par l'unité de traitement de la hauteur du flotteur dans la chambre de stabilisation, le signal d'état indiquant la présence d'un écoulement de liquide pendant l'exécution de l'opération de rinçage lorsque la hauteur du flotteur est supérieure à une valeur limite.

23. Procédé selon l'une quelconque des revendications 16 à 22, dans lequel la vanne comprend une vanne avec une première entrée de vanne, une deuxième entrée de vanne et une sortie de vanne, dans lequel dans la première position de vanne, la première entrée de vanne est, et la deuxième entrée de vanne n'est pas, en communication fluidique avec la sortie de vanne, et dans lequel la deuxième position de vanne, la deuxième entrée de vanne est, et la première entrée de vanne n'est pas, en communication fluidique avec la sortie de vanne, dans lequel la première partie du trajet de liquide s'étend de la première entrée de vanne à la sortie de vanne et la deuxième partie du trajet de liquide s'étend de la deuxième entrée de vanne à la sortie de vanne.

24. Produit formant programme informatique comprenant des instructions pour amener une unité de traitement (400) d'un compteur à lait (1) selon une ou plusieurs des revendications 1 à 15 à faire exécuter un procédé selon l'une ou plusieurs des revendications 16 à 23.
